# EUROPEAN PATENT SPECIFICATION

(11) **EP 3 136 476 B1**
(45) Date of publication and mention of the grant of the patent: **13.02.2019**
(21) Application number: 15189220.5
(22) Date of filing: 09.10.2015
(51) Int. Cl.: H01M 4/16, H01M 4/76, H01M 10/06, H01M 4/04

(54) **MULTITUBULAR GAUNTLET FOR LEAD-ACID BATTERIES**
MEHRROHRIGE MANSCHETTE FÜR BLEIAKKUMULATOREN
MANCHETTE MULTITUBULAIRE POUR BATTERIES PLOMB-ACIDE

(43) Date of publication of application: 01.03.2017
(60) Divisional application: 18211370.4
(73) Proprietor: Mecondor S.A., 4780 Sankt Vith (BE)
(72) Inventor: FRANZEN, Günter, 4761 Büllingen (BE)
(74) Representative: Pronovem

(56) References cited:
- EP-A2- 0 218 777
- WO-A1-95/08195
- DE-A1- 2 558 345
- GB-A- 1 409 501
- GB-A- 1 530 120
- US-A- 3 207 632
- US-A1- 2010 203 395

## Description

### Field of the Invention

The invention is related to multitubular bags for electrodes of lead-acid batteries, in particular for multitubular bags free of lateral finish, and to a process for producing said multitubular bags.

### Background of the Invention

It is known that one failure mechanism of electric lead batteries is related to the loss of active material from the positive plate and to the corrosion of the conducting support. These effects are both caused by mechanical stresses that are related to the volume changes of the active material due to the charging/discharging cycles of the elements and vibrations to which the battery is often subjected.

To prevent this phenomena, tubular positive battery plates generally comprise a plurality of cartridge-like parallel tubes made of porous woven or non-woven fabric material. Each tube contains lead dioxide as active electrode material and a spine of lead or lead alloy. The spines are all connected together at one end of the sheath by a common top bar to which a current take-off lug is connected, the other end of each tube being closed by a plug.

The tubes are commonly constituted by two porous sheets of fabric which are stitched together along a number of parallel lines and are thus initially in a flat or collapsed form. It is therefore necessary to open each tube to allow it to be filled with active material and one common method of doing so is disclosed in GB 1574722.

Patent documents US 2981783, EP 0275897 and GB2218664 are typical examples of prior art multitubular gauntlets for lead-acid batteries, with the associated production method. DE 25 58 345 A1 shows a multitubular gauntlet, namely a tubular plate for lead accumulators, consisting of a porous envelope containing a current collector made of Pb or Pb alloy and formed by a row of individual collectors extending vertically from an end piece fitted with a terminal lug, and where active lead oxide material is located between the collectors and the inner surface of the envelope.

A problem arising from the assembly of two flat sheets is the presence of a lateral finish at both lateral ends of the tubular bags. This represents at least two potential problems: it increases the width of the multitubular bags as well as the corresponding dead space in the final battery assembly, and it further produces a potential weak point which may induce unwanted failure. This last problem is particularly important when trying to reduce the width of the seam, as the sewing or stitching gets closer to the fabric edge.

### Summary of the Invention

The present invention is related to a multitubular gauntlet for lead-acid batteries comprising at least one sheet of fabric of a porous material seamed along parallel lines and forming a plurality of parallel tubes, wherein both lateral tubes forming the edge of said gauntlet are free of lateral finish.

Preferred embodiments of the present invention disclose at least one or a suitable combination of the following features:
- the sheet of fabric of porous material is a non-woven fabric;
- the sheet of fabric comprises fibres selected from the group consisting of polyester, polyolefin and glass fibre;
- the sheet of fabric comprises fibres of polyethylenterephtalate associated to bicomponent fibres of polyethylenterephtalate and polybuthylenterephtalate;
- the sheet of fabric comprises an impregnation of at least one acrylic or phenolic resin;

The present invention further discloses a process for the production of a multitubular gauntlet for lead-acid batteries comprising the following steps:
a) providing at least one sheet of fabric;
b) folding the at least one sheet of fabric to obtain both edges the lateral ends of the at least one fabric sheet being assembled on one of the intermediate parallel seams
c) seaming said fabric along seams parallel to the first edge, thereby forming a plurality of flat tubes parallel to the first edge;
d) thermoforming the plurality of flat tubes into the desired shape corresponding to the electrode to be used, thereby obtaining the multitubular gauntlet.

According to preferred embodiments, the production process of the multitubular gauntlet of the invention comprises at least one or a suitable combination of the following features:
- the seams (14,16) are formed by stitching, sewing or ultrasonic welding;

The present invention further discloses a lead-acid battery comprising a multitubular gauntlet (10) according to any one of the previous claims.

### Figures

Fig. 1 represents a typical prior art multitubular gauntlet for lead-acid batteries with a lateral finish on each edge of the gauntlet.
Fig. 2 represents a series of typical prior art lateral finishes of multitubular gauntlets.
Fig. 3 represents an example of multitubular gauntlet before and after the thermoforming process.
Fig. 4 represents an example of a multitubular gauntlet according to the invention before and after the thermoforming process.
Fig. 5 represents a section view of a multitubular gauntlet according to the invention with the spine and the active material inserted in the tubes.

### Key

10: multitubular gauntlet
11: sheet of fabric of porous material
14: longitudinal seam
15: edge fold
16: closing seam wherein both ends of the fabric sheet are joined together
20: active mass (Typically PbO₂)

### Detailed Description of the Invention

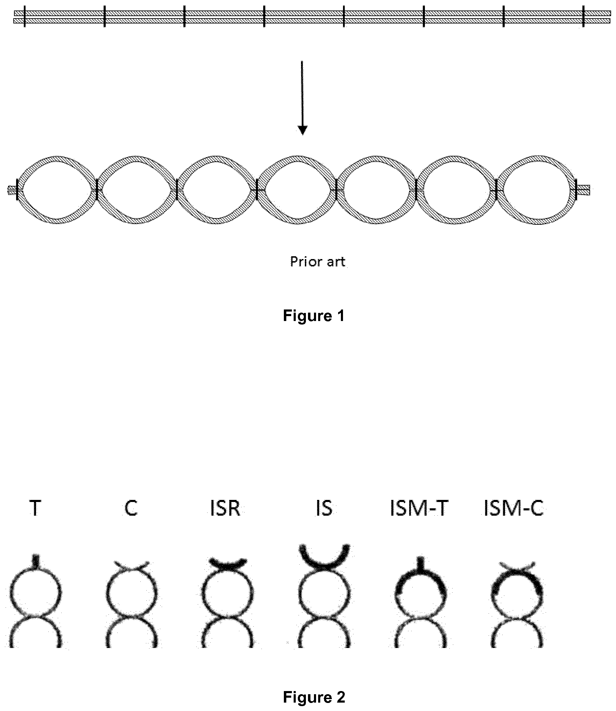

A first aspect of the invention is related to a multitubular gauntlet 10 for lead-acid batteries comprising at least one sheet of fabric 11 of porous material seamed along parallel lines (14,16) and forming a cartridge-like plurality of parallel tubes, wherein both lateral tubes forming the edge 15 of said gauntlet are free of lateral finish. The absence of finish at the lateral edges reduces the size of the gauntlet, and improved the mechanical tenacity of the lateral tube in comparison with the seamed finish of prior art gauntlets represented in fig.2. The abbreviations correspond to the geometry of the lateral finish.

The absence of lateral finish in the present invention is obtained by replacing the seam of the lateral edge tubes by a fold, so that no seam is present on both lateral edges of the multitubular gauntlet.

The mechanical strength and elasticity of the tubes should enable each single tube of the gauntlet to follow the volume variations of the active mass, from oxide to sulphate and vice versa, while continuously keeping the active mass pressed against the conductive lead-spines of the plate.

The sheet of fabric can be woven or non-woven, advantageously, the sheet of fabric of porous material is a non-woven fabric.

Suitable materials for forming the sheet of fabric are, without being limitative, for example various polyester types, polyolefins, glass fibres and mixtures thereof. Preferably, the fabric comprises polyester fibres comprising polyethylenterephtalate fibres associated to polyethylenterephtalate/ polybuthylenterephtalate bicomponent material fibres. Those materials exhibit a good mechanical behaviour and resist to acidic aggression of the electrolytic solutions, thereby avoiding contamination of the acidic solution of the battery.

In order to avoid direct contact between the acidic solution and the fibre, which can lead to material corrosion (hydrolysis of the ester bonds), the fabric is impregnated with an acrylic or a phenolic resin having a good chemical resistance to acid solutions used in batteries. The sheet of fabric is usually impregnated before being introduced in the process of the invention. The thermoforming temperature of the impregnated sheet of fabric is typically comprised between 120 and 220°C.

The material, the texture, the density of the fabric and the impregnation are selected to obtain a rigid, porous material, having high permeability to solute ions and being impermeable to active material crystallites (PbO₂). The rigidity should be sufficiently high to ease the subsequent filling of the tubes by the active material around the conductive lead spine 21. The active material can be in the form of a dry powder, or a slurry (paste).

A second aspect of the present invention is related to a method for producing multitubular gauntlet 10 without at least one lateral finish on its edge.

The process of the invention comprises the steps of:
a) providing at least one sheet of fabric 11;
b) folding said fabric 11, thereby forming a first lateral edge 15 of the multitubular gauntlet;
c) seaming said fabric 11 along seams (14,16) parallel to the first lateral edge 15, thereby forming flat tubes parallel to the first lateral edge 15, the lateral ends of the sheet of fabric being joined together at one of the parallel seams 16.

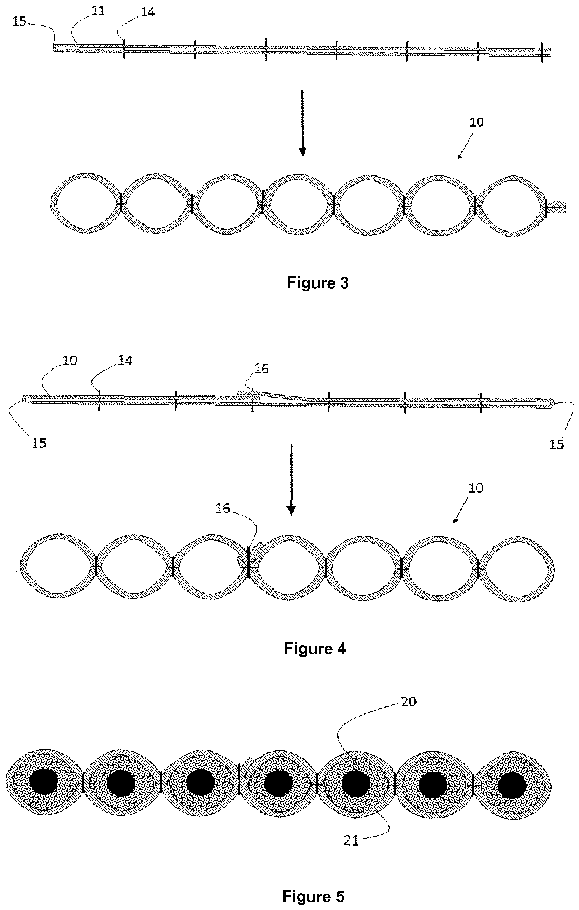

The obtained flat tubes are represented in the upper drawing of fig. 3 and fig. 4.

It is already an advantage to have one edge tube free of lateral finish, the sheet of fabric 11 is nevertheless preferably folded according to the invention on both edges of the multitubular gauntlet 10, thereby forming a multitubular gauntlet completely free of lateral finish.

In order to produce tubes having the shape corresponding to the shape of the electrode intended to be used, the flat tubes are thermoformed into the desired shape. Conventional tube shapes are cylindrical, oval, elliptical, rectangular or squared, the most commonly used being cylindrical.

The thermoformed gauntlets according to the invention are represented in the drawings of fig. 3 and 4.

The seams can be produced by any suitable permanent joining method known by those skilled in the art, such as gluing, sewing, thermal bonding, RF or ultrasonic welding. Sewing and ultrasonic welding are the preferred joining methods to be used in the present invention.

## Claims

1. Multitubular gauntlet (10) for lead-acid batteries comprising at least one sheet of fabric (11) of a porous material seamed along parallel lines (14,16) and forming a plurality of parallel tubes, **characterized in that** the lateral tubes forms the edges (15) of said gauntlet and wherein both edges of said gauntlet are free of lateral finish.

2. Multitubular gauntlet (10) according to any one of the preceding claims wherein the sheet of fabric (11) of porous material is a non-woven fabric.

3. Multitubular gauntlet (10) according to any one of the preceding claims wherein the sheet of fabric (11) comprises fibres selected from the group consisting of polyester, polyolefin and glass fibre.

4. Multitubular gauntlet (10) according to any one of the preceding claims wherein the sheet of fabric (11) comprises fibres of polyethylenterephtalate associated to bicomponent fibres of polyethylenterephtalate and polybuthylenterephtalate.

5. Multitubular gauntlet (10) according to any one of the preceding claims wherein the sheet of fabric (11) comprises an impregnation of at least one acrylic or phenolic resin.

6. Process for the production of a multitubular gauntlet (10) for lead-acid batteries according to any one of the preceding claims comprising the following steps:
a) providing at least one sheet of fabric (11);
b) folding the at least one sheet of fabric to obtain both edges, the lateral ends of the at least one fabric sheet being assembled on one of the intermediate parallel seams;
c) seaming said fabric along seams (14,16) parallel to the first edge, thereby forming a plurality of flat tubes parallel to the first edge;
d) thermoforming the plurality of flat tubes into the desired shape corresponding to the electrode to be used, thereby obtaining the multitubular gauntlet (10).

7. Process according to claim 6 wherein the seams (14, 16) are formed by stitching, sewing or ultrasonic welding.

8. Lead-acid battery comprising a multitubular gauntlet (10) according to any one of the preceding claims.

## Patentansprüche

1. Mehrrohrige Manschette (10) für Bleiakkumulatoren, umfassend mindestens eine Gewebebahn (11) eines porösen Materials, das entlang parallelen Linien (14,16) eingesäumt ist und eine Vielzahl von parallelen Rohren bildet, **dadurch gekennzeichnet, dass** die seitlichen Rohre die Kanten (15) der Manschette bilden, und wobei beide Kanten der Manschette frei von seitlichem Abschluss sind.

2. Mehrrohrige Manschette (10) nach einem der vorhergehenden Ansprüche, wobei die Gewebebahn (11) aus porösem Material ein nicht gewobenes Material ist.

3. Mehrrohrige Manschette (10) nach einem der vorhergehenden Ansprüche, wobei die Gewebebahn (11) Fasern umfasst, ausgewählt aus der Gruppe bestehend aus Polyester, Polyolefin und Glasfaser.

4. Mehrrohrige Manschette (10) nach einem der vorhergehenden Ansprüche, wobei die Gewebebahn (11) Fasern aus Polyethylenterephtalat umfasst, die mit Biokomponentenfasern aus Polyethylenterephtalat und Polybuthylenterephtalat assoziiert sind.

5. Mehrrohrige Manschette (10) nach einem der vorhergehenden Ansprüche, wobei die Gewebebahn (11) eine Imprägnierung von mindestens einem Acryl- oder Phenolharz umfasst.

6. Verfahren zur Herstellung einer mehrrohrigen Manschette (10) für Bleiakkumulatoren nach einem der vorhergehenden Ansprüche, umfassend die folgenden Schritte:
a) Bereitstellen von mindestens einer Gewebebahn (11);
b) Falten der mindestens einen Gewebebahn, um beide Kanten zu erhalten, wobei die seitlichen Enden der mindestens einen Gewebebahn auf einem der dazwischen liegenden parallelen Säume montiert sind;
c) Einsäumen des Gewebes entlang von Säumen (14, 16) parallel zur ersten Kante, wodurch eine Vielzahl von flachen Rohren parallel zur ersten Kante gebildet wird;
d) Thermoformen der Vielzahl von flachen Rohren in die gewünschte Form, die der Elektrode entspricht, die verwendet werden soll, wodurch die mehrrohrige Manschette (10) erhalten wird.

7. Verfahren nach Anspruch 6, wobei die Säume (14, 16) durch Sticken, Nähen oder Ultraschallschweißen gebildet werden.

8. Bleiakkumulatorbatterie, umfassend eine mehrrohrige Manschette (10) nach einem der vorhergehenden Ansprüche.

## Revendications

1. Manchette multitubulaire (10) pour batteries plomb-acide comprenant au moins une feuille de tissu (11) d'un matériau poreux assemblée par couture le long de lignes parallèles (14, 16) et formant une pluralité de tubes parallèles, **caractérisée en ce que** les tubes latéraux forment les bords (15) de ladite manchette et dans laquelle les deux bords de ladite manchette sont dépourvus de finition latérale.

2. Manchette multitubulaire (10) selon l'une quelconque des revendications précédentes, dans laquelle la feuille de tissu (11) de matériau poreux est un tissu non tissé.

3. Manchette multitubulaire (10) selon l'une quelconque des revendications précédentes, dans laquelle la feuille de tissu (11) comprend des fibres choisies dans le groupe constitué de polyester, de polyoléfine et de fibre de verre.

4. Manchette multitubulaire (10) selon l'une quelconque des revendications précédentes, dans laquelle la feuille de tissu (11) comprend des fibres de polytéréphtalate d'éthylène associées à des fibres bicomposées de polytéréphtalate d'éthylène et de polytéréphtalate de butylène.

5. Manchette multitubulaire (10) selon l'une quelconque des revendications précédentes, dans laquelle la feuille de tissu (11) comprend une imprégnation d'au moins une résine acrylique ou phénolique.

6. Procédé pour la production d'une manchette multitubulaire (10) pour batteries plomb-acide selon l'une quelconque des revendications précédentes, comprenant les étapes suivantes :
a) fourniture d'au moins une feuille de tissu (11) ;
b) pliage de l'au moins une feuille de tissu pour obtenir les deux bords, les extrémités latérales de l'au moins une feuille de tissu étant assemblées sur l'une des coutures parallèles intermédiaires ;
c) assemblage par couture dudit tissu le long des coutures (14, 16) parallèles au premier bord, formant ainsi une pluralité de tubes plats parallèles au premier bord ;
d) thermoformage de la pluralité de tubes plats dans la forme souhaitée correspondant à l'électrode devant être utilisée, permettant ainsi d'obtenir la manchette multitubulaire (10).

7. Procédé selon la revendication 6, dans lequel les coutures (14, 16) sont formées par piquage, couture ou soudage ultrasonique.

8. Batterie plomb-acide comprenant une manchette multitubulaire (10) selon l'une quelconque des revendications précédentes.
